# EUROPÄISCHE PATENTSCHRIFT

(11) **EP 2 898 251 B1**
(45) Veröffentlichungstag und Bekanntmachung des Hinweises auf die Patenterteilung: **07.09.2016**
(21) Anmeldenummer: 13765321.8
(22) Anmeldetag: 11.09.2013
(51) Int. Cl.: F16L 25/14, F16L 37/091

(54) **BAUSYSTEM MIT EINER ANSCHLUSSVORRICHTUNG FÜR MEHRERE UNTERSCHIEDLICHE MEDIENLEITUNGEN**
CONSTRUCTION SYSTEM WITH A CONNECTION ARRANGEMENT FOR A PLURALITY OF DIFFERENT MEDIA LINES
SYSTÈME MODULAIRE AVEC UN DISPOSITIF DE RACCORDEMENT DESTINÉ À PLUSIEURS CONDUITES DE FLUIDE DIFFERENTES

(30) Priorität: 18.09.2012 DE 102012108791
(43) Veröffentlichungstag der Anmeldung: 29.07.2015
(73) Patentinhaber: Voss Automotive GmbH, 51688 Wipperfürth (DE)
(72) Erfinder: HAGEN, Harald, 51688 Wipperfürth (DE); KLEHR, Adrian, 58802 Balve (DE); HASBERG, Markus, 51688 Wipperfürth (DE)
(74) Vertreter: Patent- und Rechtsanwälte Dr. Solf & Zapf
(86) Internationale Anmeldenummer: PCT/EP2013/068823
(87) Internationale Veröffentlichungsnummer: WO 2014/044585

(56) Entgegenhaltungen:
- EP-A1- 1 199 506
- DE-A1- 2 630 964
- DE-A1- 3 822 159
- DE-A1- 10 302 358
- DE-B3-102004 046 548
- GB-A- 2 231 931
- NL-A- 8 101 127
- US-A- 4 545 604
- US-A1- 2011 068 573

## Beschreibung

Die vorliegende Erfindung betrifft ein neuartiges Bausystem mit einer Anschlussvorrichtung für mehrere unterschiedliche Medienleitungen, wobei die Anschlussvorrichtung einen Anschlusskörper mit einer Aufnahmeöffnung für eine mit einem Leitungsende einzusteckende Medienleitung sowie mit innerhalb der Aufnahmeöffnung gelagerten Innenteilen zum Zusammenwirken mit der Medienleitung zur axialen Führung, zur mechanischen Arretierung gegen Lösen, zur umfangsgemäßen Abdichtung und gegebenenfalls zur inneren radialen Abstützung aufweist.

Unter der Bezeichnung "Medienleitungen" sind grundsätzlich Rohr- oder Schlauchleitungen für beliebige Strömungs- und/oder Druckmedien, wie Gase und Flüssigkeiten, zu verstehen, insbesondere aber Rohrleitungen aus Kunststoff.

Anschlussvorrichtungen, die zum schnellen und insbesondere auch lösbaren Anschluss von Medienleitungen durch einfaches Einstecken in eine Aufnahmeöffnung dienen, sind grundsätzlich bekannt. Lediglich beispielhaft sei hier auf die Veröffentlichungen EP 0 616 161 B1, EP 0 160 559 B1 sowie auch EP 1 199 506 A1 verwiesen.

Solche Anschlussvorrichtungen müssen für den praktischen Einsatz für eine Vielzahl von hinsichtlich ihrer Querschnittsgrößen unterschiedlichen Medienleitungen bereitgestellt werden. Bisher ist für jeden Leitungs-Außen- und/oder Innendurchmesser eine gesonderte Anschlussvorrichtung mit allen ihren Einzelteilen erforderlich. Dies führt zu einem sehr großen Aufwand für die Herstellung, Lagerhaltung und Logisitk. Die Veröffentlichung DE 10 2004 046548 B3 offenbart ein Bausystem nach dem Oberbegriff von Anspruch 1.

Der vorliegenden Erfindung liegt die Aufgabe zu Grunde, bei solchen Anschlussvorrichtungen zur Auslegung für unterschiedliche Leitungsquerschnitte den Aufwand zu reduzieren.

Erfindungsgemäß wird dies durch ein neuartiges Bausystem mit den Merkmalen des unabhängigen Anspruchs 1 erreicht. Vorteilhafte Ausgestaltungsmerkmale sind in den abhängigen Ansprüchen sowie der anschließenden Beschreibung enthalten.

Durch das erfindungsgemäße Bausystem können vorteilhafterweise mit ein und demselben Anschlusskörper baukastenartig Anschlussvorrichtungen für mehrere unterschiedliche Medienleitungen bereitgestellt werden, indem lediglich die jeweils an die Medienleitung angepassten Innenteile eingesetzt werden. Da es sich bei dem Anschlusskörper um den aufwändigsten und kostenintensivsten Bestandteil der Anschlussvorrichtung handelt, führt die Erfindung zu einer wirtschaftlichen Herstellung verschiedener Ausführungen in Anpassung an verschiedene Medienleitungen. Darüber hinaus können aber auch verschiedene Anschlusskörper bereitgestellt werden, die dann jeweils für unterschiedliche maximale Leitungs-Außendurchmesser ausgelegt sind. Mit den jeweils zugehörigen, erfindungsgemäß ausgelegten Innenteilen werden dadurch Gruppen, so genannte "Cluster", gebildet, wobei jeder Anschlusskörper innerhalb eines bestimmten Baugrößenbereiches für mehrere verschiedene Medienleitungen geeignet ist. Auf diese Weise lassen sich Anschlussvorrichtungen für eine große Bandbreite hinsichtlich ihrer Querschnittsgrößen verschiedener Medienleitungen mit nur wenigen Bauteilen konzipieren; vor allem wird die Anzahl der kostenintensivsten Anschlusskörper reduziert, weil jeder Anschlusskörper für eine Gruppe von mehreren verschiedenen Medienleitungen geeignet ist.

Anhand eines in den Zeichnungen veranschaulichten, bevorzugten Ausführungsbeispiels soll die Erfindung im Folgenden weitergehend erläutert werden. Es zeigen:
- Fig. 1: einen Axialschnitt durch eine bevorzugte Ausführung einer Anschlussvorrichtung mit eingestecktem Rohr-Leitungsende,
- Fig. 2: eine gegenüber Fig. 1 verkleinerte Seiten-Explosionsansicht, wobei die einzelnen Bestandteile jeweils im Halb-Axialschnitt dargestellt sind,
- Fig. 3: einen schematischen Halbschnitt der Anschlussvorrichtung zur Veranschaulichung unterschiedlicher Innenteile zur Anpassung an unterschiedliche Medienleitungen,
- Fig. 4: eine vergrößerte Teildarstellung aus Fig. 3 in einem oberen, mündungsseitigen Bereich,
- Fig. 5: eine weitere Teildarstellung aus Fig. 3 in einem mittleren Bereich und
- Fig. 6: eine weitere Teilansicht aus Fig. 3 in einem der Mündungsseite entgegengesetzten unteren Bereich.

In den verschiedenen Figuren der Zeichnung sind gleiche Teile stets mit den gleichen Bezugszeichen versehen.

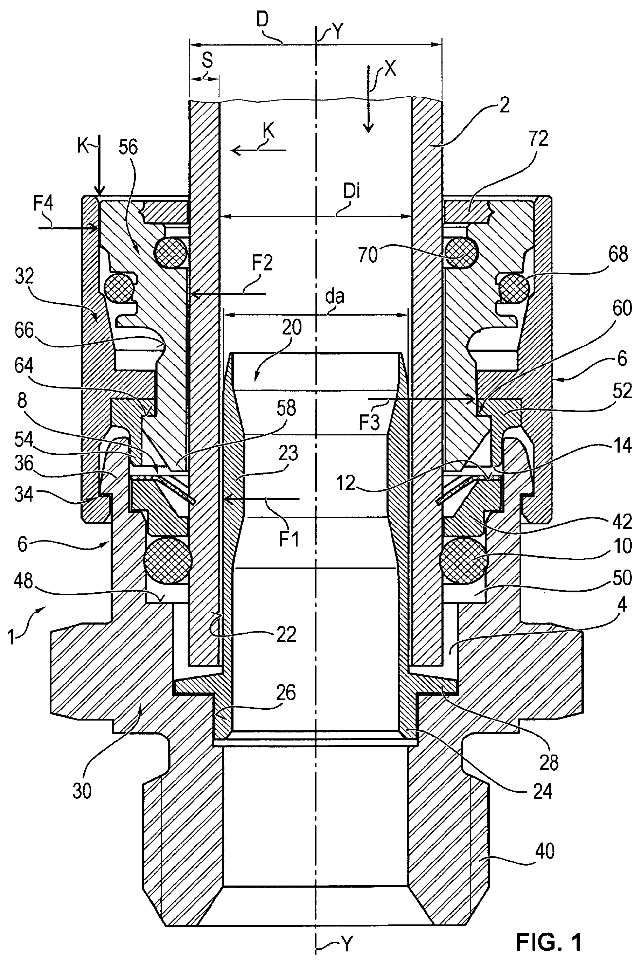

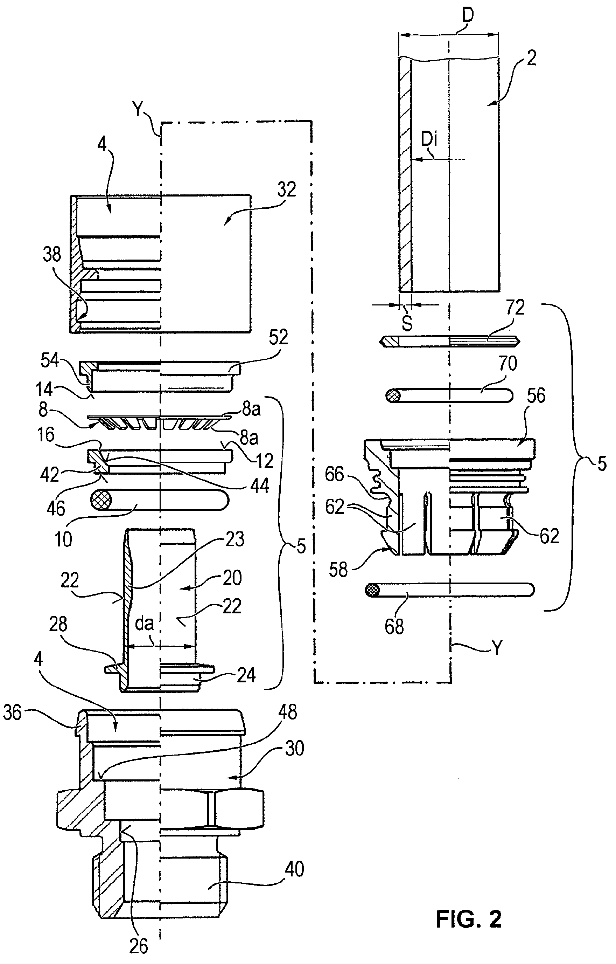

Zunächst soll anhand der Fig. 1 und 2 eine bevorzugte Ausführung einer Anschlussvorrichtung 1 genauer erläutert werden. Diese Anschlussvorrichtung 1 dient zum schnellen und bevorzugt auch lösbaren Anschluss einer Medienleitung 2 durch einfaches Einstecken eines Leitungsendes in eine Aufnahmeöffnung 4 eines Anschlusskörpers 6. Die Einsteckrichtung ist in Fig. 1 mit einem Pfeil X veranschaulicht. Da somit kein Anschlussdorn zum Aufstecken der Medienleitung 2 vorhanden ist, kann auch von einem "Dornlos-Stecksystem" gesprochen werden.

Innerhalb der Aufnahmeöffnung 4 des Anschlusskörpers 6 sind bestimmte Innenteile 5 (vgl. Fig. 2) gelagert, die mit der Medienleitung 2 insbesondere zur axialen Führung, zur mechanischen Arretierung gegen ungewolltes Lösen, zur umfangsgemäßen Abdichtung und gegebenenfalls zur inneren radialen Abstützung sowie bevorzugt auch für einen gewollten Lösevorgang zusammenwirken.

Zum Arretieren der eingesteckten Medienleitung 2 gegen Herausziehen ist innerhalb der Aufnahmeöffnung 4 ein Halteelement gelagert, welches als federelastischer Zahnring 8 mit einem äußeren Umfangsbereich 8a und mit mehreren über den Umfang verteilt angeordneten, sich radial nach innen und schräg in Einsteckrichtung X geneigt erstreckenden und dadurch widerhakenartig kraft- und/oder formschlüssig gegen die äußere Umfangsfläche der Medienleitung 2 wirkenden Haltezähnen 8b ausgebildet ist. Zur Abdichtung der eingesteckten Medienleitung 2 nach außen ist zudem innerhalb des Anschlusskörpers 6 mindestens eine Umfangsdichtung 10 gelagert, die einen radial zwischen der Medienleitung 2 und dem Anschlusskörper 6 gebildeten Ringspalt nach außen abdichtet. Die Umfangsdichtung 10 liegt somit unmittelbar radial zwischen der Medienleitung 2 und dem Anschlusskörper 6 und dichtet somit als einzige Mediendichtung den Anschlusskörper 6 komplett nach außen ab.

Der äußere Umfangsbereich 8a des Zahnrings 8 liegt im unverformten Zustand in einer zur Längsachse Y der Anschlussvorrichtung 1 senkrechten Ebene, während die Haltezähne 8b gemeinsam durch ihre Schrägstellung auf einem Konus liegen. Die Haltezähne 8b definieren mit ihren inneren Haltekanten einen Umkreis, dessen Durchmesser im unverformten Zustand kleiner als der Außendurchmesser der Medienleitung 2 ist. Dadurch wirken die Haltekanten mit einer radialen Haltekraft insbesondere formschlüssig oder zumindest kraftformschlüssig gegen den Außenumfang der eingesteckten Medienleitung 2.

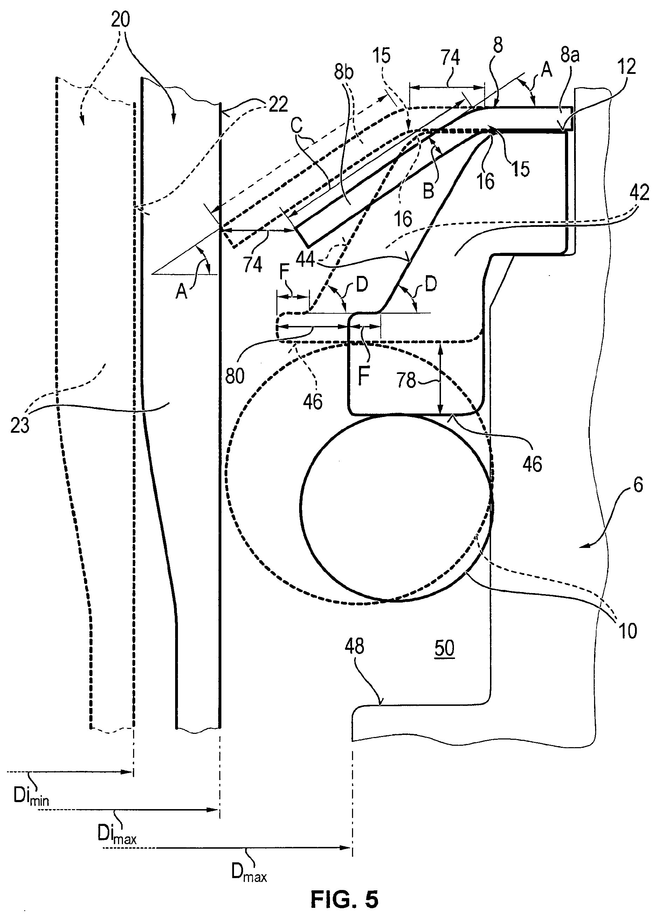

Der Zahnring 8 ist mit seinem äußeren Umfangsbereich 8a mit einem definiert begrenzten axialen Bewegungsspiel innerhalb des Anschlusskörpers 6 gelagert. Dieses axiale Bewegungsspiel wird durch beidseitige, axial gegenüberliegende Anlageabschnitte 12 und 14 innerhalb des Anschlusskörpers 6 begrenzt. Ein erster Anlageabschnitt 12 ist auf der in Einsteckrichtung X gesehen "unteren" Seite (Fig. 1) durch eine radiale, zur Längsachse Y senkrechte Anlagefläche gebildet, und ein zweiter Anlageabschnitt 14 ist auf der axial gegenüberliegenden "oberen" Seite im radial äußeren Bereich des Zahnrings 8 angeordnet. Die Anlageabschnitte 12 und 14 sind axial mit einem lichten Abstand voneinander beabstandet, der größer als die axial gemessene Dicke des Zahnring-Umfangsbereiches 8a ist. Aus der Differenz: "Abstand der Anlageabschnitte 12, 14 minus Dicke des Zahnring-Umfangsbereiches 8a" resultiert das axiale Bewegungsspiel des Zahnrings 8. Weiterhin wirkt der Zahnring 8 - siehe dazu auch Fig. 5 - am winkligen Übergang 15 zwischen dem äußeren Umfangsbereich 8a und den Haltezähnen 8b derart mit einer innerhalb des Anschlusskörpers 6 am radial inneren Umfang der den ersten Anlageabschnitt 12 bildenden radialen Anlagefläche vorgesehenen, umfangsgemäßen Kippkante 16 zusammen, dass beim Einstecken der Medienleitung 2 durch deren Anlage an den Haltezähnen 8b der Zahnring 8 aus einer mit seinem äußeren Umfangsbereich 8a gegen den ersten, "unteren" Anlageabschnitt 12 gedrückten Ausgangslage wippenartig um die Kippkante 16 verschwenkt bzw. tordiert wird, bis der äußere Umfangsbereich 8a radial außenseitig zur abgestützten Anlage an dem zweiten, axial gegenüberliegenden "oberen" Anlageabschnitt 14 gelangt. Der radial äußere Umfang des um die Kippkante 16 wippenartig verschwenkten Zahnring-Umfangsbereiches 8a hebt sich folglich von dem ersten Anlageabschnitt 12 ab und wird gegen den zweiten Anlageabschnitt 14 bewegt. Wenn ausgehend von dieser Stellung die Medienleitung 2 weiter in Einsteckrichtung X bewegt wird, erfolgt eine elastische Biegeverformung im Wesentlichen nur noch im Bereich der die Kippkante 16 radial nach innen überragenden Haltezähne 8b. Der Einsteckvorgang wird dann abgeschlossen, indem die Medienleitung 2 etwas gegen die Einsteckrichtung X zurückgezogen wird. Dadurch schneiden sich die Haltezähne 8b geringfügig formschlüssig oder zumindest kraftformschlüssig in den Außenumfang der Leitung 2 ein.

Zusätzlich ist bevorzugt innerhalb der Aufnahmeöffnung 4 des Anschlusskörpers 6 eine Stützhülse 20 derart koaxial angeordnet, dass die Medienleitung 2 beim Einstecken auf eine zylindrische Außenfläche 22 der Stützhülse 20 aufschiebbar ist, wobei die Stützhülse 20 bzw. deren zylindrische Außenfläche 22 einen derart an den Innendurchmesser Di der Medienleitung 2 angepassten Außendurchmesser da aufweist, dass die eingesteckte Leitung 2 von der Stützhülse 20 radial abgestützt wird und bei Beaufschlagung mit einer von dem Zahnring 8 bewirkten radialen Haltekraft Verformungen der Medienleitung 2 im Wirkbereich des Zahnrings 8 vermieden werden. Hierbei kann bevorzugt vorgesehen sein, dass die Stützhülse 20 im Wirkbereich des Zahnrings 8 einen Stützabschnitt 23 mit nach innen verdickter Wandstärke aufweist.

Zur Halterung der Stützhülse 20 innerhalb des Anschlusskörpers 6 weist die Stützhülse 20 einen zylindrischen Steckabschnitt 24 auf, der passend in eine innere Aufnahme 26 des Anschlusskörpers 6 eingesteckt wird. Hierbei fungiert ein Anschlag 28 für die Leitung 2 zusätzlich auch als Einsteckbegrenzung für die Stützhülse 20.

In weiterer vorteilhafter Ausgestaltung der Anschlussvorrichtung 1 ist vorgesehen, dass der Anschlusskörper 6 ein axial zweigeteiltes Gehäuse mit einem ersten, stutzenartigen, in Einsteckrichtung weisenden Gehäuseteil 30 und einem zweiten, eine Mündungsseite der Aufnahmeöffnung 4 bildenden, hülsenförmigen Gehäuseteil 32 aufweist. Das erste Gehäuseteil 30 kann beliebig gestaltet sein, z. B. als Verteiler mit unterschiedlicher Anzahl von Abgängen, gerader Durchgangsverbinder (Fig. 1) sowie auch als Winkelverbinder oder als L-, T- oder Y-Verbinder. Die beiden Gehäuseteile 30, 32 sind bevorzugt über eine umfangsgemäß geschlossene Rastverbindung 34 miteinander verbunden, siehe insbesondere Fig. 1. In der dargestellten, bevorzugten Ausführung greift dazu das erste Gehäuseteil 30 mit einem Steckabschnitt 36 axial und radial formschlüssig in eine innere, nutartige Rastausnehmung 38 des zweiten Gehäuseteils 32 ein, siehe Fig. 2. Das erste Gehäuseteil 30 kann als Einschraubstutzen mit einem Außengewindeansatz 40 ausgebildet sein.

Die oben beschriebene Kippkante 16 für den Zahnring 8 ist mit Vorteil an einem Einsatzring 42 gebildet, der zudem auch den ersten Anlageabschnitt 12 in Form einer radial nach außen an die Kippkante 16 angrenzenden, zur Längsachse Y senkrechten Stirnfläche aufweist. Die Kippkante 16 ist somit am Übergang zwischen der den ersten Anlageabschnitt 12 bildenden Stirnfläche und einer innen angrenzenden Konusfläche 44 gebildet, siehe auch Fig. 5. Hierbei ist weiter vorgesehen, dass der Einsatzring 42 innerhalb des Anschlusskörpers 6 mit einer in Einsteckrichtung weisenden Stirnfläche 46 gemeinsam mit einer dieser axial gegenüberliegenden Flankenfläche 48 des Anschlusskörpers 6 bzw. des ersten Gehäuseteils 30 eine Dichtungskammer 50 für die Umfangsdichtung 10 in Axialrichtung begrenzt.

Vorteilhafterweise ist das erste Gehäuseteil 30 innenseitig ohne Hinterschnitte in Einsteckrichtung X ausgebildet. Dies bedeutet, dass die Innendurchmesser in der Einsteckrichtung X entgegengesetzter Richtung nur größer, aber an keiner Stelle kleiner werden. Dadurch können die Innenteile 5, und zwar die Umfangsdichtung 10, der Einsatzring 42 und der Zahnring 8 durch einfaches axiales Einsetzen montiert werden. Zudem muss die Umfangsdichtung 10 beim Einsetzen weder radial gedehnt noch radial gestaucht werden.

Der oben beschriebene zweite, obere Anlageabschnitt 14 für den äußeren Umfangsbereich 8a des Zahnrings 8 ist bevorzugt ebenfalls an einem ringförmigen Einsatzelement 52 gebildet, welches gemäß Fig. 1 innerhalb des Anschlusskörpers 6, und zwar insbesondere innerhalb des zweiten Gehäuseteils 32, in Rohr-Löserichtung abgestützt ist. Hierbei wird der zweite Anlageabschnitt 14 von einer endseitigen Stirnfläche eines axial vorstehenden Ringstegs 54 des Einsatzelementes 52 gebildet, wobei dieser Ringsteg 54 vorzugsweise auch in das erste Gehäuseteil 30 bzw. in dessen Steckabschnitt 36 eingreift.

Für eine Lösbarkeit der eingesteckten und über den Zahnring 8 arretierten Medienleitung 2 ist mit Vorteil ein hülsenförmiges Löseelement 56 vorgesehen. Dieses Löseelement 56 greift derart axial verschiebbar in den Anschlusskörper 6 ein, dass durch Einschieben des Löseelementes 56 in Einsteckrichtung X der Zahnring 8 zur Freigabe der Leitung 2 im Bereich der Haltezähne 8b elastisch verformbar ist. Dazu wirkt das Löseelement 56 mit einem Betätigungsabschnitt 58 gegen die Haltezähne 8b. Das Löseelement 56 verhindert eine unbeabsichtigte Freigabe der Medienleitung 2 bei einer quer zur Längsachse Y der Anschlussvorrichtung ausgeübten Kraft K auf die Medienleitung 2 bzw. bei einseitiger Kraftaufbringung auf das Löseelement 56. Dazu ist das Löseelement 56 an der Medienleitung 2 und an dem hülsenförmigen Gehäuseteil 32 sowie die Medienleitung 2 an das Löseelement 56 und an die zylindrische Außenfläche 22 der Stützhülse 20 derart geführt - siehe Pfeile F1 bis F4 in Fig. 1 - dass ein Verkippen des Löseelementes 56 und damit eine Freigabe der Medienleitung 2 verhindert wird, siehe Fig. 1.

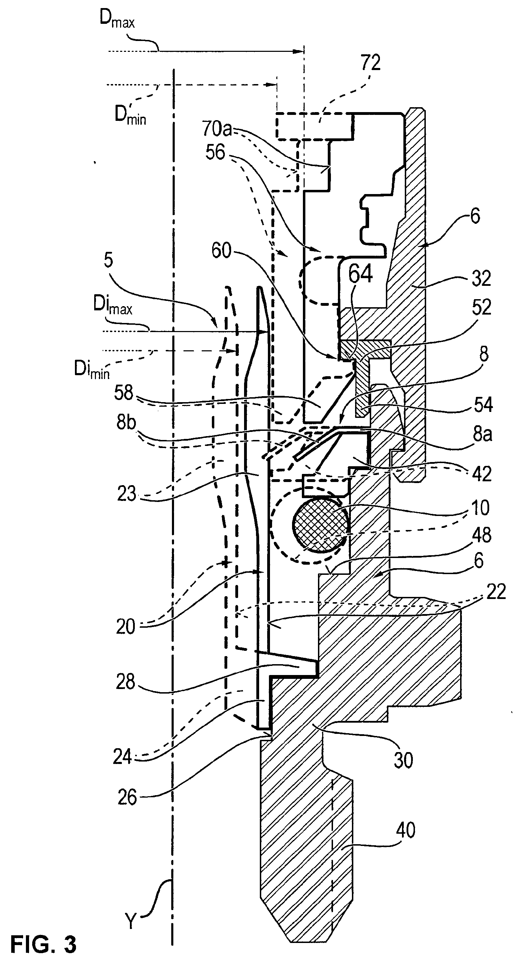

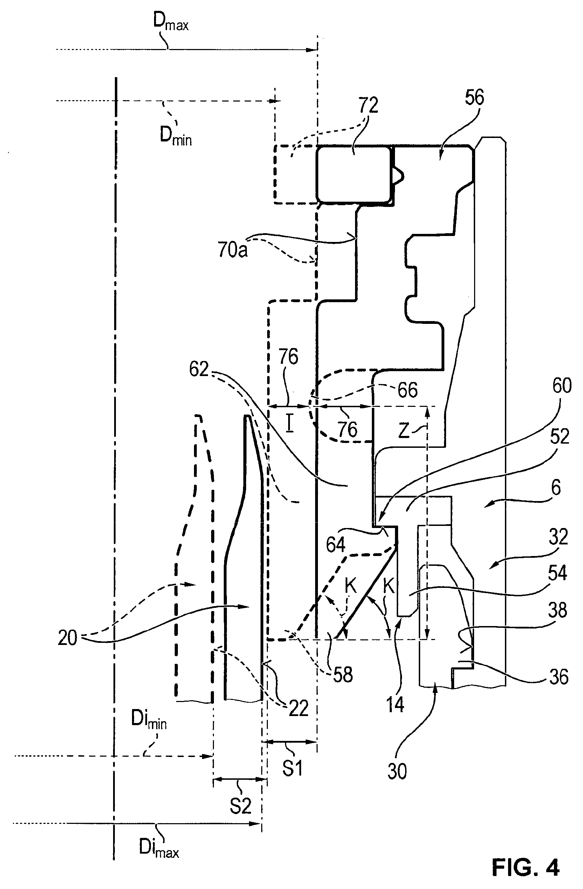

Das Löseelement 56 ist bevorzugt innerhalb des Anschlusskörpers 6 über eine Verrastung 60 gegen Demontage gehalten, siehe auch Fig. 4. Dazu weist das Löseelement 56 an seinem in Einsteckrichtung X weisenden Ende durch axiale Schlitze gebildete Rastarme 62 (Fig. 2) auf, die mit radial nach außen weisenden Rastnasen eine radiale Stufenfläche 64 (siehe Fig. 1) innerhalb des Anschlusskörpers 6 hintergreifen, wobei mit Vorteil diese Stufenfläche 64 an dem Einsatzelement 52 gebildet ist (siehe auch Fig. 3 und 4). In weiterer vorteilhafter Ausgestaltung können die Rastarme 62 mit dem übrigen, umfangsgemäß geschlossenen Ringteil des Löseelementes 56 über scharnierartige Einschnürungen 66 verbunden sein, wodurch die radiale Beweglichkeit der Rastarme 62 begünstigt wird.

Weiterhin weist das Löseelement 56 einerseits eine äußere Umfangsdichtung 68 und andererseits eine innere Umfangsdichtung 70 auf. Die äußere Umfangsdichtung 68 dient zur Abdichtung eines Ringspaltes zwischen dem hülsenförmigen Löseelement 56 und dem Anschlusskörper 6 bzw. dessen zweitem Gehäuseteil 32. Die innere Umfangsdichtung 70 dichtet einen Ringspalt zu der Leitung 2 hin ab. Außerdem fungiert in bevorzugter Ausgestaltung die äußere Umfangsdichtung 68 auch als Federelement zur Erzeugung einer axialen Rückstellkraft für das Löseelement 56.

In der dargestellten, bevorzugten Ausführung der Anschlussvorrichtung 1 ist schließlich noch ein ringscheibenförmiges, deckelartiges Verschlusselement 72 zum Verschließen einer mündungsseitig verbleibenden, die eingesteckte Medienleitung 2 umschließenden ringförmigen Teilöffnung der Aufnahmeöffnung 4 vorgesehen. Gemäß Fig. 1 verschließt dieses Verschlusselement 72 auch den Bereich der inneren Umfangsdichtung 70. Dadurch kann die innere Umfangsdichtung 70 vereinfacht in das Löseelement 56 eingelegt werden, da in diesem Bereich des Löseelementes 56 kein Hinterschnitt vorhanden ist. Durch das Verschlusselement 72 wird auch ein Dampfstrahlschutz erreicht. Zudem kann das Verschlusselement 72 auch mindestens einen nicht dargestellten, axial nach außen vorstehenden Ansatz als Handhabe zur manuellen Betätigung des Löseelementes 56 aufweisen.

Erfindungsgemäß ist nun zur Herstellung der Anschlussvorrichtung 1 ein neuartiges Bausystem vorgesehen, wobei mit dem jeweils gleichen Anschlusskörper 6 eine Auslegung für unterschiedliche Querschnittsgrößen der Medienleitung 2 möglich ist. Dazu sind erfindungsgemäß in den hinsichtlich der Innenkontur der Aufnahmeöffnung 4 jeweils gleichen, für einen bestimmten maximalen Leitungs-Außendurchmesser Dₘₐₓ- siehe dazu Fig. 4 - ausgelegten Anschlusskörper 6 zur Anpassung an mindestens zwei verschiedene, hinsichtlich ihrer Querschnittsgrößen unterschiedliche Medienleitungen 2 wahlweise verschiedene Innenteile 5 einsetzbar. Dazu sind die Innenteile 5 jeweils einerseits an die stets gleiche Innenkontur der Aufnahmeöffnung 4 des Anschlusskörpers 6 sowie andererseits jeweils an die Querschnittsgröße einer der unterschiedlichen Medienleitungen 2 angepasst. In vorteilhafter Ausgestaltung kann ein und derselbe Anschlusskörper 6 durch verschiedene Innenteile 5 an mindestens drei und bis zu insbesondere sechs verschiedene, hinsichtlich ihrer Querschnittsgrößen unterschiedliche Medienleitungen 2 angepasst werden.

Was zunächst erfindungsgemäß den Zahnring 8 betrifft - siehe dazu insbesondere die vergrößerte Darstellung in Fig. 5 - so ist dieser in seinen verschiedenen, an unterschiedliche Medienleitungen 2, und zwar speziell an verschiedene Leitungs-Außendurchmesser D angepassten Ausführungen derart mit radial unterschiedlich breit bemessenen äußeren Umfangsbereichen 8a ausgebildet, dass die Haltezähne 8b bei ansonsten hinsichtlich Zahnlänge und Winkelausrichtung gleichbleibenden Verhältnissen mit ihren radial inneren Zahnkanten unterschiedliche Durchmesser in Anpassung an den jeweiligen Leitungs-Außendurchmesser D definieren. Dies bedeutet praktisch, dass die Haltezähne 8b lediglich in radialer Richtung "wandern" durch unterschiedlich breit bemessene äußere Umfangsbereiche 8a der jeweiligen unterschiedlichen Zahnringe 8. Dies ist anhand der Darstellung in Fig. 5 leicht nachvollziehbar; der mögliche Größenbereich ist dort mit einem Doppelpfeil 74 veranschaulicht. Damit wird eine Anpassung des Zahnrings 8 für einen Bereich des Leitungs-Außendurchmessers D zwischen einem bestimmten maximalen Durchmesser Dₘₐₓ und einem bestimmten minimalen Durchmesser Dₘᵢₙ gemäß Fig. 3 ermöglicht, insbesondere in mehreren Stufen durch mindestens drei verschiedene Zahnringe 8. Da sich mit Änderung des Leitungs-Außendurchmessers D auch die Umfangslänge ändert, muss bei den unterschiedlichen Ausführungen des jeweils angepassten Zahnrings 8 - um gleiche Verhältnisse der Haltezähne 8b bezüglich Winkelneigung, Länge und damit bezüglich des Verformungsverhaltens zu erreichen - auch eine Anpassung der Anzahl der Haltezähne 8b und/oder deren Umfangsbreite und/oder der Umfangsbreite der Zahn-Lücken erfolgen.

Was weiterhin die Umfangsdichtung 10 betrifft - siehe dazu insbesondere Fig. 3 und 5 - so ist diese in ihren verschiedenen, an unterschiedliche Leitungs-Außendurchmesser D angepassten Ausführungen mit unterschiedlich großen Ringquerschnitten und mit an die jeweiligen Leitungs-Außendurchmesser D angepassten Innendurchmessern bei ansonsten gleichem Außendurchmesser ausgebildet. In Fig. 3 und 5 ist jeweils eine Umfangsdichtung 10 mit einem kleineren Ringquerschnitt zur Auslegung für den größten Leitungs-Außendurchmesser Dₘₐₓ vollgezeichnet dargestellt, während eine Auslegung der Umfangsdichtung 10 für den kleineren Leitungs-Außendurchmesser Dₘᵢₙ gestrichelt dargestellt ist. Auch hier sind beliebige Unterteilungen möglich.

Weiterhin müssen für unterschiedliche Leitungsquerschnitte auch verschiedenartige Löseelemente 56 bereitgestellt werden. Dazu ist vorgesehen, dass das Löseelement 56 in seinen verschiedenen Ausführungen bei gleichbleibender Außenkontur mit seiner Innenkontur verschiedene, an den jeweiligen Leitungs-Außendurchmesser D angepasste Innendurchmesser definiert. Dabei liegt der endseitige, in Einsteckrichtung weisende Betätigungsabschnitt 58 stets radial im Bereich der Haltezähne 8b des zugehörigen Zahnrings 8. Weiterhin weisen die Rastarme 62 des Löseelementes 56 in dessen verschiedenen Ausführungen stets gleiche Federeigenschaften mit konstanter Verformungslänge und gleichartigen Gelenkzonen auf. Dazu ist insbesondere die radial gemessene Breite I der Rastarme 62 im Bereich der oben erwähnten Einschnürungen 66 in allen Ausführungen konstant. Dies ist in Fig. 4 durch Doppelpfeile 76 und durch den Kennbuchstaben I veranschaulicht. Ebenso kann durch die Variation der Anzahl der Rastarme 62 bei unterschiedlichen Leitungsquerschnitten die Lösekraft konstant bleiben. Dies wird vorteilhafterweise auch in Kombination mit den Federeigenschaften durch die konstante radiale Breite I der Rastarme 62 erreicht. Die oben beschriebene äußere Umfangsdichtung 68 des Löseelementes 56 zur Abdichtung des Ringspaltes zu dem Anschlusskörper 6 hin ist in allen Ausführungen gleich. Die innere Umfangsdichtung 70 allerdings weist in den verschiedenen, an unterschiedliche Leitungs-Außendurchmesser D angepassten Ausführungen entsprechend unterschiedliche Innendurchmesser bei vorzugsweise gleichem Ringquerschnitt (gleiche "Schnurstärke") auf. Dementsprechend wird auch ein innerer Anlagebereich 70a des Löseelementes 56 für die innere Umfangsdichtung 70 entsprechend modifiziert, siehe dazu Fig. 3.

Weitere wichtige Anpassungen erfolgen im Bereich des Einsatzrings 42, siehe dazu Fig. 5. Daraus ergibt sich, dass erfindungsgemäß der Einsatzring 42 in seinen verschiedenen Ausführungen einerseits auf der Seite des Zahnrings 8 in Anpassung an dessen unterschiedliche Ausführungen mit radial unterschiedlich breiten Stirnflächen ausgebildet ist, so dass die Kippkante 16 stets im Übergang 15 am Beginn der Haltezähne 8b liegt. Die oben beschriebene Konusfläche 44 "wandert" bei gleicher Länge und Winkelneigung ebenfalls nur in radialer Richtung. Andererseits ist der Einsatzring 42 auch in axialer Richtung unterschiedlich lang ausgebildet, und zwar zur Anpassung an die verschiedenen Umfangsdichtungen 10 für einen jeweils erforderlichen so genannten "Nutfüllgrad" (Füllgrad der Dichtungskammer 50) für eine optimale Dichtungsverpressung, indem die axiale Weite der Dichtungskammer 50 entsprechend variiert wird, siehe dazu in Fig. 5 den Doppelpfeil 78. Außerdem wird auch die die Dichtungskammer 50 axial begrenzende Stirnfläche 46 des Einsatzrings 42 hinsichtlich ihrer radialen Breite an den Leitungs-Außendurchmesser D so angepasst, siehe den Doppelpfeil 80, dass ein radialer Spalt zwischen der Medienleitung 2 und dem die Stirnfläche 46 aufweisenden Ringbereich des Einsatzrings 42 derart klein bemessen ist, dass die Umfangsdichtung 10 nicht womöglich unter Mediendruck in den Spalt zwischen Leitung 2 und Einsatzring 42 gedrückt werden kann (Minimierung einer so genannten Spalt-Extrusion).

Eine weitere Anpassung erfolgt im Bereich des Verschlusselementes 72, indem dieses in den verschiedenen Ausführungen jeweils bezüglich seines inneren Durchmessers an die jeweilige Medienleitung 2 angepasst ist. Dazu wird insbesondere auf Fig. 3 und 4 verwiesen.

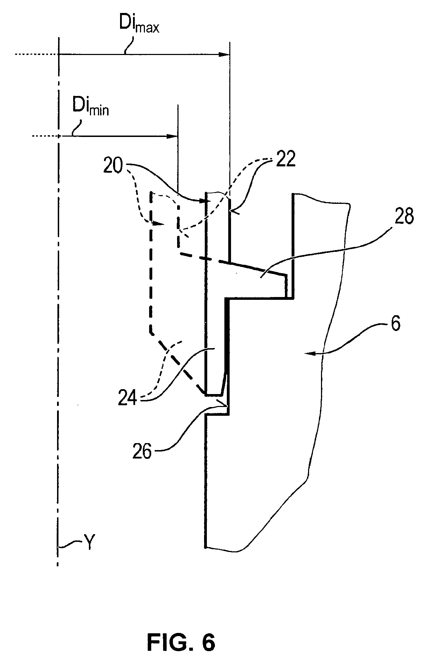

Was schließlich noch die Stützhülse 20 betrifft, so muss diese speziell an den jeweiligen Leitungs-Innendurchmesser Di im Bereich zwischen einem größten Innendurchmesser Diₘₐₓ und einem kleinsten Innendurchmesser Diₘᵢₙ angepasst werden, siehe Fig. 3 und 4. Dazu wird die zylindrische Außenfläche 22 mit einem entsprechenden Außendurchmesser "da" ausgebildet, siehe Fig. 1 und 2. Der zur Halterung vorgesehene Steckabschnitt 24 sowie bevorzugt auch der Anschlag 28 sind aber in allen Ausführungen jeweils gleich, siehe insbesondere Fig. 6.

Aus der bisherigen Beschreibung ergibt sich, dass zur Anpassung an verschiedene Leitungs-Außendurchmesser D die folgenden Innenteile 5 in jeweils angepasster Ausführung in den stets gleichen Anschlusskörper 6 eingesetzt werden: Umfangsdichtung 10, Einsatzring 42, Zahnring 8 sowie Löseelement 56 mit den Umfangsdichtungen 68, 70 und dem Verschlusselement 72. Zusätzlich - oder aber auch alternativ - kann eine Anpassung an den Leitungs-Innendurchmesser Di durch Einsatz einer angepassten Ausführung der Stützhülse 20 erfolgen. Das Einsatzelement 52 ist in allen Ausführungen innerhalb eines "Clusters" gleich und gehört daher im Grunde zur Innenkontur der Aufnahmeöffnung 4 des Anschlusskörpers 6.

Zusätzlich wird noch bemerkt, dass in den Figuren 4 und 5 eingezeichnete und mit jeweils den gleichen großen Kennbuchstaben bezeichnete Maße bei den unterschiedlich ausgelegten Innenteilen 5 auch jeweils gleich ausgelegt sind.

Abschließend sei allgemein noch bemerkt, dass in den Darstellungen in Fig. 3 bis 6 jeweils nur zwei unterschiedliche Auslegungen der Innenteile 5 veranschaulicht sind. Hierbei handelt es sich um die beiden Extremen, zwischen denen allerdings noch mehrere Zwischen-Auslegungen möglich sind. So kann beispielsweise der Anschlusskörper 6 mit seiner Innenkontur für einen maximalen Leitungs-Außendurchmesser Dₘₐₓ von 10 mm ausgelegt sein. Durch verschiedene Innenteile 5 können aber auch Leitungen 2 mit einem Außendurchmesser von 9 mm, 8 mm sowie wahlweise auch Zwischengrößen von beispielsweise 3/8" angeschlossen werden. Hierbei können durch entsprechende Stützhülsen 20 Leitungen mit unterschiedlichen Wandstärken S montiert werden, beispielsweise 1 mm, 1,5 mm, 1,25 mm, siehe dazu die in Fig. 4 eingezeichneten Maße S1 und S2.

Natürlich sind auch beliebige andere Zwischengrößen sowie auch beliebige Auslegungen für andere Gruppen von unterschiedlichen Medienleitungen 2 mit jeweils beliebigen Zwischengrößen möglich. Zudem ist durch die Erfindung innerhalb einer "Cluster"-Gruppe auch eine Anpassung an mehr als sechs verschiedene, hinsichtlich ihrer Querschnittsgrößen unterschiedliche Medienleitungen 2 möglich.

Durch die zuvor beschriebenen Maßnahmen können vorteilhafterweise innerhalb einer/jeder "Cluster"-Gruppe mit demselben Anschlusskörper 6, das heißt denselben Gehäuseteilen 30, 32, für mehrere verschiedene, hinsichtlich ihrer Querschnittsgrößen, und zwar Außen- und/oder Innendurchmesser, unterschiedliche Medienleitungen 2 gleiche, zumindest aber sehr ähnliche Eigenschaften hinsichtlich der mechanischen Halterung der Leitung 2 und des Verhaltens beim Lösen der Leitung 2 sowie auch hinsichtlich der Dichtungseigenschaften erreicht werden.

Für die Abdichtung wird ein Dichtsystem mit zumindest annähernd gleichem Füllgrad und gleicher Dichtungsverpressung durch folgende Merkmale geschaffen:
- konstanter Außendurchmesser der als einzige Mediendichtung fungierenden Umfangsdichtung 10 zur Anlage innerhalb eines Dichtungsbereiches des Anschlusskörpers 6 mit konstantem Innendurchmesser
- stets gleiche Flankenfläche 48 im Anschlusskörper 6 zur unteren axialen Begrenzung der Dichtungskammer 50
- unterschiedliche Ringquerschnitte (Schnurstärken) der Umfangsdichtung 10 zur Anpassung des Dichtungs-Innendurchmessers an den Leitungs-Außendurchmesser
- radial unterschiedlich breite Stirnflächen 46 des Einsatzrings 42 zur oberen axialen Begrenzung der Dichtungskammer 50 und zur Vermeidung oder zumindest Minimierung einer so genannten Spalt-Extrusion der Umfangsdichtung 10
- unterschiedliche axiale Längen des Einsatzrings 42 zur optimalen Dichtungsverpressung über die Stirnfläche 46
- stets gleiche, als Schmutzdichtung fungierende äußere Umfangsdichtung 68
- stets gleicher Ringquerschnitt (Schnurstärke) der als Schmutzdichtung fungierenden inneren Umfangsdichtung 70 bei unterschiedlichen, angepassten Ringdurchmessern (Innen- und Außendurchmesser)
- variierender Innendurchmesser des Anlagebereiches 70a für die innere Umfangsdichtung 70 innerhalb des Löseelementes 56

Für die konstanten mechanischen Eigenschaften sind folgende Merkmale von Bedeutung:
- stets gleiche Winkelausrichtung der Haltezähne 8b des Zahnrings 8
- stets gleiche freie "Hebel"-Länge der Haltezähne 8b

## Patentansprüche

1. Bausystem mit einer Anschlussvorrichtung (1) für mehrere unterschiedliche Medienleitungen (2), wobei die Anschlussvorrichtung (1) einen Anschlusskörper (6) mit einer Aufnahmeöffnung (4) für eine mit einem Leitungsende einzusteckende Medienleitung (2) sowie mit innerhalb der Aufnahmeöffnung (4) gelagerten Innenteilen (5) zum Zusammenwirken mit der Medienleitung (2) zur axialen Führung, zur mechanischen Arretierung gegen Lösen, zur umfangsgemäßen Abdichtung und gegebenenfalls zur inneren radialen Abstützung aufweist, wobei in den hinsichtlich der Innenkontur der Aufnahmeöffnung (4) jeweils gleichen, für einen bestimmten maximalen Leitungs-Außendurchmesser (Dₘₐₓ) ausgelegten Anschlusskörper (6) zur Anpassung an mindestens zwei verschiedene, hinsichtlich ihrer Querschnittsgrößen unterschiedliche Medienleitungen (2) wahlweise verschiedene Innenteile (5) einsetzbar sind, die jeweils einerseits an die stets gleiche Innenkontur der Aufnahmeöffnung (4) des Anschlusskörpers (6) sowie andererseits jeweils an die Querschnittsgröße einer der unterschiedlichen Medienleitungen (2) angepasst sind, wobei als Innenteile (5)
- eine ringförmige Umfangsdichtung (10) zum Abdichten eines Ringspaltes zwischen der Innenkontur der Aufnahmeöffnung (4) und dem Außenumfang der Medienleitung (2) angeordnet ist,
- ein Haltering zur Halterung der Medienleitung (2) und
- ein Einsatzring (42) in der Aufnahmeöffnung (4) sitzt, wobei der Einsatzring (42) einerseits eine Abstützung (12) für den Haltering bildet und andererseits mit einer Stirnfläche (46) eine Dichtungskammer (50) für die Umfangsdichtung (10) in axialer Richtung begrenzt, wobei als Haltering ein federelastischer Zahnring (8) vorgesehen ist, **dadurch gekennzeichnet, dass** der federelastische Zahnring (8) mit einem
äußeren Umfangsbereich (8a) und mit mehreren über den Umfang verteilt angeordneten, sich radial nach innen und schräg in Leitungs-Einsteckrichtung (X) geneigt erstreckenden, kraft- und/oder formschlüssig gegen die Medienleitung (2) wirkenden Haltezähnen (8b) ausgestaltet ist, wobei der Einsatzring (42) in seinen verschiedenen, an unterschiedliche Leitungs-Außendurchmesser (D) angepassten Ausführungen einerseits radial unterschiedliche Breiten entsprechend den jeweiligen radialen Breiten des äußeren Umfangsbereiches (8a) des jeweils zugehörigen Zahnrings (8) aufweist und andererseits zur Anpassung an die verschiedenen Umfangsdichtungen (10) für eine jeweils erforderliche Dichtungsverpressung in axialer Richtung zur Begrenzung der Dichtungskammer (50) unterschiedlich lang sowie zur Minimierung eines radialen Spaltes zwischen der Medienleitung (2) und dem Einsatzring (42) im Bereich einer die Dichtungskammer (50) begrenzenden Stirnfläche (46) auch radial unterschiedlich breit ausgebildet ist.

2. Bausystem nach Anspruch 1, wobei die Haltezähne (8b) des Zahnrings (8) stets eine gleiche Winkelausrichtung und stets eine gleiche freie Hebel-Länge aufweisen.

3. Bausystem nach Anspruch 1 oder 2,
wobei verschiedene Innenteile (5) zur Anpassung an mindestens drei und bis zu insbesondere sechs verschiedene, hinsichtlich ihrer Querschnittsgrößen unterschiedliche Medienleitungen (2) wahlweise in den gleichen Anschlusskörper (6) einsetzbar sind.

4. Bausystem nach Anspruch 1,
wobei als weiteres Innenteil (5) ein hülsenförmiges Löseelement (56) derart axial verschiebbar in der Aufnahmeöffnung (4) des Anschlusskörpers (6) gelagert ist, dass durch Einschieben des Löseelementes (56) der Zahnring (8) im Bereich der Haltezähne (8b) zur Freigabe der Medienleitung (2) elastisch verformbar ist.

5. Bausystem nach einem der Ansprüche 1 bis 4,
wobei als Innenteil (5) innerhalb der Aufnahmeöffnung (4) des Anschlusskörpers (6) eine Stützhülse (20) derart koaxial angeordnet ist, dass die Medienleitung (2) beim Einstecken zur radialen Abstützung auf eine zylindrische Außenfläche (22) der Stützhülse (20) aufschiebbar ist.

6. Bausystem nach einem der Ansprüche 1 bis 5,
wobei der Zahnring (8) in seinen verschiedenen, an unterschiedliche Leitungs-Außendurchmesser (D) angepassten Ausführungen derart mit radial unterschiedlich breit bemessenen äußeren Umfangsbereichen (8a) ausgebildet ist, dass die Haltezähne (8b) bei ansonsten hinsichtlich ihrer Zahnlänge und Winkelausrichtung gleichartigen Verhältnissen mit ihren radial inneren Zahnkanten unterschiedliche Durchmesser in Anpassung an den jeweiligen Leitungs-Außendurchmesser (D) definieren.

7. Bausystem nach einem der Ansprüche 1 bis 6,
wobei die Umfangsdichtung (10) in ihren verschiedenen, an unterschiedliche Leitungs-Außendurchmesser (D) angepassten Ausführungen mit unterschiedlich großen Ringquerschnitten und mit an die jeweiligen Leitungs-Außendurchmesser (D) angepassten Innendurchmessern bei gleichem Außendurchmesser ausgebildet ist.

8. Bausystem nach Anspruch 4, wobei das Löseelement (56) in seinen verschiedenen, an unterschiedliche Leitungs-Außendurchmesser (D) angepassten Ausführungen bei gleichbleibender Außenkontur mit seiner Innenkontur verschiedene, an den jeweiligen Leitungs-Außendurchmesser (D) angepasste Innendurchmesser definiert, wobei ein endseitiger, in Einsteckrichtung weisender Betätigungsabschnitt (58) stets derart radial im Bereich der Haltezähne (8b) des zugehörigen Zahnrings (8) liegt, dass die Haltezähne (8b) mit dem Betätigungsabschnitt (58) zur Freigabe der Medienleitung (2) elastisch verformbar sind.

9. Bausystem nach einem der Ansprüche 4 oder 8, wobei das Löseelement (56) innerhalb des Anschlusskörpers (6) über eine Verrastung (60) gegen Demontage gehalten ist, wobei das Löseelement (56) an seinem in Einsteckrichtung (X) weisenden Ende durch axiale Schlitze gebildete Rastarme (62) aufweist, die mit radial nach außen weisenden Rastnasen eine Raststufe (64) innerhalb des Anschlusskörpers (6) hintergreifen.

10. Bausystem nach Anspruch 9,
wobei die Rastarme (62) des Löseelementes (56) in dessen verschiedenen, an unterschiedliche Leitungs-Außendurchmesser (D) angepassten Ausführungen stets gleiche Federeigenschaften mit konstanter Verformungslänge aufweisen.

11. Bausystem nach einem der Ansprüche 4, 8, 9 oder 10, wobei das Löseelement (56) einerseits eine äußere, in allen verschiedenen Ausführungen stets gleiche Umfangsdichtung (68) zur Abdichtung eines radialen Ringspaltes zu dem Anschlusskörper (6) hin sowie andererseits eine innere Umfangsdichtung (70) zur Abdichtung des radialen Ringspaltes zu der Medienleitung (2) hin aufweist, wobei die innere Umfangsdichtung (70) in den verschiedenen, an unterschiedliche Leitungs-Außendurchmesser (D) angepassten Ausführungen unterschiedliche Durchmesser bei vorzugsweise gleichem Ringquerschnitt aufweist.

12. Bausystem nach einem der Ansprüche 4, 8, 9, 10 oder 11, wobei das Löseelement (56) im Bereich einer äußeren Mündung ein ringförmiges Verschlusselement (72) zum Verschließen einer mündungsseitig verbleibenden, die eingesteckte Medienleitung (2) umschließenden Ringöffnung aufweist, wobei das Verschlusselement (72) in den verschiedenen Ausführungen jeweils bezüglich seines inneren Durchmessers an die jeweilige Medienleitung (2) angepasst ist.

13. Bausystem nach einem der Ansprüche 6 bis 12, und nach Anspruch 5, wobei die Stützhülse (20) in ihren verschiedenen, an unterschiedliche Leitungs-Querschnitte angepassten Ausführungen einerseits einen stets gleichen Halteabschnitt zur Halterung in dem Anschlusskörper (6) sowie andererseits einen hülsenförmigen Stützabschnitt mit unterschiedlichen Außendurchmessern (da) in Anpassung an den jeweiligen Innendurchmesser (Di) der zugehörigen Medienleitung (2) aufweist.

14. Bausystem nach einem der Ansprüche 4, 8, 9, 10, 11 oder 12 und nach Anspruch 5,
**dadurch gekennzeichnet, dass** das Löseelement (56) an der Medienleitung (2) und an dem hülsenförmigen Gehäuseteil sowie die Medienleitung (2) an dem Löseelement (56) und an der zylindrischen Außenfläche (22) der Stützhülse (20) derart geführt ist (F1 bis F4), dass ein Verkippen des Löseelementes (56) und damit eine Freigabe der Medienleitung (2) verhindert wird.

## Claims

1. Construction system with a connection device (1) for a plurality of different media lines (2), wherein the connection device (1) has a connection body (6) with a receiving opening (4) for a media line (2) to be plugged in with a line end, and with inner parts (5) mounted inside the receiving opening (4) in order to interact with the media line (2) for axial guiding, for mechanical locking against release, for peripheral sealing and, if appropriate, for inner radial support, wherein optionally different inner parts (5) can be inserted into the connection body (6), which is always the same with respect to the inner contour of the receiving opening (4) and is designed for a defined maximal line external diameter (Dₘₐₓ), for adaptation to at least two different media lines (2) of different cross-sectional sizes, which inner parts (5) are in each case adapted, on the one hand, to the always same inner contour of the receiving opening (4) of the connection body (6) and, on the other hand, in each case to the cross-sectional size of one of the different media lines (2), wherein as inner parts (5)
- a ring-shaped peripheral seal (10) is arranged for sealing an annular gap between the inner contour of the receiving opening (4) and the outer periphery of the media line (2),
- a retaining ring for retaining the media line (2), and
- an insert ring (42) sits in the receiving opening (4), wherein the insert ring (42) on the one hand forms a support (12) for the retaining ring and on the other hand, with an end face (46), axially delimits a sealing chamber (50) for the peripheral seal (10),
wherein a resiliently elastic toothed ring (8) is provided as retaining ring, **characterized in that** the resiliently elastic toothed ring (8) is configured with an outer peripheral area (8a) and with several retaining teeth (8b) which are distributed about the periphery, extend radially inwards and obliquely in the line plug-in direction (X) and act with force-fit and/or form-fit engagement against the media line (2), wherein the insert ring (42), in its various embodiments adapted to different line external diameters (D), on the one hand has radially different widths corresponding to the respective radial widths of the outer peripheral area (8a) of the respectively associated toothed ring (8) and on the other hand has different lengths in order to adapt to the different peripheral seals (10) for a respective required sealing pressure in the axial direction for delimiting the sealing chamber (50) and also has different widths in order to minimize a radial gap between the media line (2) and the insert ring (42) in the area of an end face (46) delimiting the sealing chamber (50).

2. Construction system according to Claim 1, wherein the retaining teeth (8b) of the toothed ring (8) always have the same angular orientation and always have the same free lever length.

3. Construction system according to Claim 1 or 2, wherein different inner parts (5) can optionally be inserted into the same connection body (6) for the purpose of adaptation to at least three, and in particular up to six, different media lines (2) which differ in terms of their cross-sectional sizes.

4. Construction system according to Claim 1, wherein, as further inner part (5), a sleeve-shaped release element (56) is mounted axially displaceably in the receiving opening (4) of the connection body (6), in such a way that, by insertion of the release element (56), the toothed ring (8) is elastically deformable in the area of the retaining teeth (8b) for release of the media line (2).

5. Construction system according to one of Claims 1 to 4, wherein, as inner part (5) inside the receiving opening (4) of the connection body (6), a support sleeve (20) is coaxially arranged in such a way that the media line (2), upon being plugged in, can be pushed onto a cylindrical outer surface (22) of the support sleeve (20) for radial support.

6. Construction system according to one of Claims 1 to 5, wherein the toothed ring (8), in its various embodiments adapted to different line external diameters (D), is configured with outer peripheral areas (8a) dimensioned with different radial widths, in such a way that the retaining teeth (8b), while otherwise having the same ratios in terms of their tooth length and angular orientation, define different diameters with their inner radial tooth edges in adaptation to the respective line external diameter (D).

7. Construction system according to one of Claims 1 to 6, wherein the peripheral seal (10), in its various embodiments adapted to different line external diameters (D), is configured with ring cross sections of different sizes and with internal diameters adapted to the respective line external diameters (D), while having the same external diameter.

8. Construction system according to Claim 4, wherein the release element (56), in its various embodiments adapted to different line external diameters (D), defines, in the case of a constant outer contour, with its inner contour, various internal diameters adapted to the respective line external diameter (D), wherein an end-side actuation portion (58) pointing in the plug-in direction always lies radially in the area of the retaining teeth (8b) of the associated toothed ring (8) in such a way that the retaining teeth (8b) are elastically deformable with the actuation portion (58) for release of the media line (2).

9. Construction system according to either of Claims 4 and 8, wherein the release element (56) is held inside the connection body (6) by means of a catch mechanism (60) to prevent disassembly, wherein the release element (56), at its end pointing in the plug-in direction (X), has locking arms (62) which are formed by axial slits and which, with radially outwardly pointing locking lugs, engage behind a locking step (64) inside the connection body (6).

10. Construction system according to Claim 9, wherein the locking arms (62) of the release element (56), in its various embodiments adapted to different line external diameters (D), always have identical spring properties with a constant deformation length.

11. Construction system according to one of Claims 4, 8, 9 and 10, wherein the release element (56) has, on the one hand, an outer peripheral seal (68) which is always identical in all the various embodiments and which serves to seal a radial annular gap in the direction of the connection body (6), and, on the other hand, an inner peripheral seal (70) for sealing the radial annular gap in the direction of the media line (2), wherein the inner peripheral seal (70), in the various embodiments adapted to different line external diameters (D), has different diameters with preferably an identical ring cross section.

12. Construction system according to one of Claims 4, 8, 9, 10 and 11, wherein the release element (56) has, in the area of an outer mouth, a ring-shaped closure element (72) for closing an annular opening which remains on the mouth side and encloses the inserted media line (2), wherein the closure element (72) in the various embodiments is adapted in each case in respect of its internal diameter to the respective media line (2).

13. Construction system according to one of Claims 6 to 12 and according to Claim 5, wherein the support sleeve (20), in its various embodiments adapted to different line cross sections, has, on the one hand, an always identical retaining portion for retention in the connection body (6) and, on the other hand, a sleeve-shaped support portion with different external diameters (da) to adapt to the respective internal diameter (Di) of the associated media line (2).

14. Construction system according to one of Claims 4, 8, 9, 10, 11 or 12 and according to Claim 5, **characterized in that** the release element (56) is guided on the media line (2) and on the sleeve-shaped housing part, and the media line (2) is guided on the release element (56) and on the cylindrical outer surface (22) of the support sleeve (20) in such a way (F1 to F4) that a tilting of the release element (56) and thus a release of the media line (2) are prevented.

## Revendications

1. Système modulaire comprenant un dispositif de raccordement (1) pour plusieurs conduites de fluide différentes (2),
le dispositif de raccordement (1) présentant un corps de raccordement (6) comprenant une ouverture de réception (4) pour une conduite de fluide (2) devant être enfichée par une extrémité de conduite, et comprenant des parties intérieures (5) supportées à l'intérieur de l'ouverture de réception (4) pour coopérer avec la conduite de fluide (2) en vue du guidage axial, pour le blocage mécanique contre un desserrage, pour l'étanchéité périphérique et éventuellement pour le support radial interne, dans lequel différentes parties intérieures (5) peuvent être insérées de manière sélective dans le corps de raccordement (6) conçu à chaque fois de manière identique en termes du contour interne de l'ouverture de réception (4), pour un diamètre extérieur de conduite maximal déterminé (Dₘₐₓ), pour l'adaptation à au moins deux conduites de fluide (2) différentes ayant des grandeurs en section transversale différentes, lesquelles parties intérieures (5) sont à chaque fois adaptées d'une part au contour intérieur toujours identique de l'ouverture de réception (4) du corps de raccordement (6) et d'autre part à chaque fois à la grandeur en section transversale de l'une des différentes conduites de fluide (2),
- un joint d'étanchéité périphérique annulaire (10) pour l'étanchéité d'une fente annulaire entre le contour intérieur de l'ouverture de réception (4) et la périphérie extérieure de la conduite de fluide (2) étant disposé en tant que parties intérieures (5),
- une bague de retenue pour retenir la conduite de fluide (2) et
- une bague d'insertion (42) reposant dans l'ouverture de réception (4), la bague d'insertion (42) formant d'une part un support (12) pour la bague de retenue et d'autre part limitant dans la direction axiale, avec une surface frontale (46), une chambre d'étanchéité (50) pour le joint d'étanchéité périphérique (10),
une bague dentée élastique à ressort (8) étant prévue en tant que bague de retenue, **caractérisé en ce que** la bague dentée élastique à ressort (8) est réalisée avec une région périphérique extérieure (8a) avec plusieurs dents de retenue (8b) s'étendant radialement vers l'intérieur et de manière inclinée obliquement dans la direction d'enfichage de la conduite (X), agissant par engagement par correspondance de formes et/ou par force contre la conduite de fluide (2), la bague d'insertion (42), dans ses différentes réalisations adaptées à différents diamètres extérieurs (D) de conduite, présentant d'une part des largeurs radialement différentes correspondant au largeurs radiales respectives de la région périphérique extérieure (8a) de la bague dentée respectivement associée (8) et d'autre part, pour l'adaptation aux différents joints d'étanchéité périphériques (10) pour un pressage hermétique respectivement nécessaire dans la direction axiale pour limiter la chambre d'étanchéité (50), étant réalisée avec une longueur différente et pour minimiser une fente radiale entre la conduite de fluide (2) et la bague d'insertion (42) dans la région d'une surface frontale (46) limitant la chambre d'étanchéité (50) étant également réalisée avec une largeur radiale différente.

2. Système modulaire selon la revendication 1,
dans lequel les dents de retenue (8b) de la bague dentée (8) présentent toujours une orientation angulaire identique et toujours une longueur de levier libre identique.

3. Système modulaire selon la revendication 1 ou 2, dans lequel différentes parties intérieures (5) pour l'adaptation à au moins trois, et jusqu'à notamment six, conduites de fluide différentes (2), ayant des grandeurs en section transversale différentes, peuvent être insérées de manière sélective dans le même corps de raccordement (6).

4. Système modulaire selon la revendication 1,
dans lequel un élément de desserrage en forme de douille (56) est supporté de manière déplaçable axialement en tant que partie intérieure supplémentaire (5) dans l'ouverture de réception (4) du corps de raccordement (6), de telle sorte que par insertion de l'élément de desserrage (56), la bague dentée (8) puisse être déformée élastiquement dans la région des dents de retenue (8b) pour libérer la conduite de fluide (2).

5. Système modulaire selon l'une quelconque des revendications 1 à 4,
dans lequel, en tant que partie intérieure (5), une douille de support (20) est disposée coaxialement à l'intérieur de l'ouverture de réception (4) du corps de raccordement (6) de telle sorte que la conduite de fluide (2), lors de l'insertion pour le support radial, puisse être poussée sur une surface extérieure cylindrique (22) de la douille de support (20).

6. Système modulaire selon l'une quelconque des revendications 1 à 5,
dans lequel la bague dentée (8) est réalisée, dans ses différentes réalisations adaptées à des diamètres extérieurs de conduite (D) différents, avec des régions périphériques extérieures (8a) ayant des dimensions en largeur différentes de telle sorte que les dents de retenue (8b) définissent, pour des rapports par ailleurs identiques en termes de leur longueur de dents et de leur orientation angulaire, avec leurs arêtes de dents radialement intérieures, des diamètres différents adaptés au diamètre extérieur de conduite respectif (D).

7. Système modulaire selon l'une quelconque des revendications 1 à 6,
dans lequel le joint d'étanchéité périphérique (10) est réalisé, dans ses différentes réalisations adaptées à des diamètres extérieurs de conduite (D) différents, avec des sections transversales annulaires de différentes tailles et avec des diamètres intérieurs adaptés au diamètre extérieur de conduite respectif (D) pour un même diamètre extérieur.

8. Système modulaire selon la revendication 4,
dans lequel l'élément de desserrage (56) définit, dans ses différentes réalisations adaptées à des diamètres extérieurs de conduite (D) différents, pour un contour extérieur inchangé, avec son contour intérieur, différents diamètres intérieurs adaptés au diamètre extérieur de conduite respectif (D), une portion d'actionnement (58) du côté de l'extrémité, tournée dans la direction d'enfichage, étant toujours située radialement dans la région des dents de retenue (8b) de la bague dentée associée (8) de telle sorte que les dents de retenue (8b) puissent être déformées élastiquement avec la portion d'actionnement (58) pour libérer la conduite de fluide (2).

9. Système modulaire selon l'une quelconque des revendications 4 ou 8,
dans lequel l'élément de desserrage (56) est retenu contre un démontage à l'intérieur du corps de raccordement (6) par le biais d'un encliquetage (60), l'élément de desserrage (56) présentant, au niveau de son extrémité tournée dans la direction d'enfichage (X), des bras d'encliquetage (62) formés par des fentes axiales, qui viennent en prise par l'arrière, au moyen d'ergots d'encliquetage orientés radialement vers l'extérieur, avec un étage d'encliquetage (64) à l'intérieur du corps de raccordement (6).

10. Système modulaire selon la revendication 9,
dans lequel les bras d'encliquetage (62) de l'élément de desserrage (56), dans ses réalisations différentes adaptées à différents diamètres extérieurs de conduite (D), présentent toujours des propriétés élastiques identiques avec une longueur de déformation constante.

11. Système modulaire selon l'une quelconque des revendications 4, 8, 9 ou 10,
dans lequel l'élément de desserrage (56) présente d'une part un joint d'étanchéité périphérique extérieur (68) toujours identique dans toutes les réalisations différentes, pour l'étanchéité d'une fente annulaire radiale par rapport au corps de raccordement (6) et d'autre part un joint d'étanchéité périphérique intérieur (70) pour l'étanchéité de la fente annulaire radiale par rapport à la conduite de fluide (2), le joint d'étanchéité intérieur (70) présentant, dans les différentes réalisations adaptées à différents diamètres extérieurs de conduite (D), des diamètres différents pour une section transversale annulaire de préférence identique.

12. Système modulaire selon l'une quelconque des revendications 4, 8, 9, 10 ou 11,
dans lequel l'élément de desserrage (56) présente, dans la région d'une embouchure extérieure, un élément de fermeture annulaire (72) pour fermer une ouverture annulaire subsistant du côté de l'embouchure, entourant la conduite de fluide insérée (2), l'élément de fermeture (72) étant adapté dans ses différentes réalisations à chaque fois en ce qui concerne son diamètre intérieur, à la conduite de fluide respective (2).

13. Système modulaire selon l'une quelconque des revendications 6 à 12, et selon la revendication 5, dans lequel la douille de support (20) présente, dans ses différentes réalisations adaptées à différentes sections transversales de conduite, d'une part une portion de retenue toujours identique pour la fixation dans le corps de raccordement (6) et d'autre part une portion de support en forme de douille avec des diamètres extérieurs différents (da) adaptés aux diamètres intérieurs respectifs (Di) de la conduite de fluide associée (2).

14. Système modulaire selon l'une quelconque des revendications 4, 8, 9, 10, 11 et 12 et selon la revendication 5,
**caractérisé en ce que** l'élément de desserrage (56) est guidé au niveau de la conduite de fluide (2) et au niveau de la partie de boîtier en forme de douille, et la conduite de fluide (2) est guidée au niveau de l'élément de desserrage (56) et au niveau de la surface extérieure cylindrique (22) de la surface de support (20), (F1 à F4), de telle sorte qu'un basculement de l'élément de desserrage (56) et par conséquent une libération de la conduite de fluide (2) soient empêchés.
